# EUROPEAN PATENT APPLICATION

(11) **EP 1 841 080 A1**
(43) Date of publication of application: **03.10.2007**
(21) Application number: 06006319.5
(22) Date of filing: 27.03.2006
(51) Int. Cl.: H04B 1/16

(54) **Method for processing a signal**

(71) Applicant: SONY DEUTSCHLAND GMBH, 10785 Berlin (DE)
(72) Inventor: Nöthlings, Rolf c/o Stuttgart Techn. Center Sony Deutschalnd GmbH, 70327 Stuttgart (DE)
(74) Representative: Müller - Hoffmann & Partner

(57) **Abstract**

The present invention relates to a method for processing a signal (S), wherein at least one of the group consisting of NF processing steps, audio processing steps, demodulation processing steps, and parts thereof of a processing section (S3) is suspended, while one or a plurality of certain suspending criteria (SCD) are fulfilled, and wherein said one or said plurality of suspending criteria (SCD) are obtained or evaluated as control data (CD) from or by a pre-processing section (S2) with respect to said signal (S) to be processed or a part or derivative thereof.

## Description

### Field of the Invention

The present invention relates to a method for processing a signal and more particular also to a power efficient broadcast receiver.

### Background of the Invention

In many customer devices which are adapted to receive a signal, for instance, via a broadcast channel, certain processing steps are applied to the received signal in order to extract certain information and/or in order to modify the signal for recording, displaying and/or reproduction issues or the like.

Sometimes the received signal has certain properties which lead to the necessity of enabling or disabling certain processing steps.

It is known that for instance certain processing steps with respect to a received signal can be disabled or suspended due to an user action, for instance in the case where a reproduction process for an audio signal is switched from stereo to mono reproduction.

### Summary of the Invention

It is an object of the present invention to provide a method for processing a signal which is capable of disabling certain processing steps with respect to the signal in a comparable easy and reliable manner.

The object underlying the present invention is achieved by methods for processing a signal according to the present invention by the features of independent claims 1 or 3. The object underlying the present invention is also achieved by an apparatus, by a computer program product, as well as by a computer readable storage medium according to independent claims 27, 30, and 31, respectively. Preferred embodiments of the inventive method and of the apparatus are within the scope of the respective dependent sub-claims.

The invention in its broadest sense is based on the aspect that switching off or disabling certain processing steps in a processing stage or section of the processing cascade with respect to a signal to be processed is based on an evaluation of the signal itself, i.e. on signal properties which are obtained in a preceding processing stage or section, e.g. in a preceding pre-processing step with respect to the signal to be processed.

According to the present invention a method for processing a signal is provided, comprising at least a first processing stage and a second processing stage, wherein said first processing stage is a preceding processing stage with respect to said second processing stage, wherein at least one processing step of second processing stage is suspended while at least one of certain suspending criteria is fulfilled, and wherein said at least one suspending criteria is obtained as control data from at least one processing step of said second processing stage with respect to at least a part of said signal to be processed or a derivative thereof.

According to an alternative or additional view of the present invention a method for processing a signal is provided wherein at least one of the group consisting of NF processing steps, audio processing steps, demodulation processing steps, and parts thereof of a processing stage or section is suspended, while one or a plurality of certain suspending criteria are fulfilled, and wherein said one or said plurality of suspending criteria are obtained or evaluated as control data from or by a pre-processing stage or section with respect to said signal to be processed or with respect to a part or derivative of said signal to be processed, in particular as properties thereof.

The present invention further provides an apparatus for processing a signal, which is adapted and which comprises means for carrying out and realizing a method for processing a signal according to the present invention and the steps thereof.

The present invention also provides a computer program product, comprising computer program means which is arranged and adapted in order to carry out and realize a method for processing a signal according to the present invention and the steps thereof when is executed on a computer or a digital signal processing means.

In addition, the present invention provides a computer readable storage medium, comprising a computer program product according to the present invention.

### Brief description of the Drawings

The invention will now be explained based on preferred embodiments thereof and by taking reference to the accompanying and schematical figures.
- **Fig. 1**: is a schematic block diagram which elucidates some basic aspects of a first embodiment of the method for processing a signal according to the present invention.
- **Fig. 2**: is a schematic block diagram which elucidates some basic aspects of a second embodiment of the method for processing a signal according to the present invention.
- **Fig. 3**: is a schematic block diagram elucidating an arrangement of an apparatus for realizing the method for processing a signal according to an embodiment of the present invention.
- **Fig. 4**: is a schematic block diagram elucidating an arrangement of an apparatus for realizing the method for processing a signal according to a third embodiment of the present invention.
- **Fig. 5**: is a schematic flowchart for elucidating a first realization of the embodiment shown in Fig. 4.
- **Fig. 6**: is a schematic flowchart for elucidating a second realization of the embodiment shown in Fig. 4.

### Detailed description of the Invention

In the following functional and structural similar or equivalent element structures will be denoted with the same reference symbols. Not in each case of their occurrence a detailed description will be repeated.

According to the present invention a method for processing a signal S is provided, comprising at least a first processing stage S2 and a second processing stage S3,
wherein said first processing stage S2 is a preceding processing stage with respect to said second processing stage S3, wherein at least one processing step of second processing stage S3 is suspended while at least one of certain suspending criteria SCD is fulfilled, and wherein said at least one suspending criteria SCD is obtained as control data CD from at least one processing step of said second processing stage S2 with respect to at least a part of said signal S to be processed or a derivative thereof.

Preceding and succeeding may be used in a temporal sense.

Said at least one suspensible processing step may comprise at least one of the group consisting of NF processing steps, audio processing steps, demodulation processing steps, and parts thereof.

Said first and said second processing stages S2 and S3 may also be referred to as respective first and said second processing stage or sections S2 and S3. Additionally or alternatively, said first processing stage or section S2 may also be referred to as a pre-processing stage or section S2. These notion may be synonymously be used in the sense of the present invention.

According to an alternative or additional view the present invention provides a method for processing a signal S, wherein at least one of the group consisting of NF processing steps, audio processing steps, demodulation processing steps, and parts thereof of a processing stage or section S3 is suspended, while one or a plurality of certain suspending criteria SCD are fulfilled, and wherein said one or said plurality of suspending criteria SCD are obtained or evaluated as control data CD from or by a pre-processing stage or section S2 with respect to said signal S to be processed or with respect to a part or derivative of said signal S to be processed, in particular as properties thereof.

Said process of suspending said at least one of the group consisting of NF processing steps, audio processing steps, demodulation processing steps, and parts thereof may be or may comprises at least one of switching off, disabling and having stand-by one or a plurality of the group consisting of respective processing elements, processing devices and parts thereof, in particular to thereby at least one of reduce power consumption and control the design and/or output of an output signal outD.

The presence of monaural reception condition or mono reception condition in the reception process S1 for said signal S to be processed may be used as one or for one suspension criterion SCD.

At least one of the presence of a certain noise level in said signal S to be processed and said noise level in said signal S to be processed as such is used as one or for one suspension criterion SCD.
wherein at least one of the presence of a signal S to be processed with a signal strength below a certain threshold value and said signal strength of said signal S to be processed as such is used as one or for one suspension criterion SCD.

Said threshold value may indicate or may be chosen to indicate that no signal S to be processed at all is received.

The presence of a certain signal component within said signal S to be processed may be used as one or for one suspension criterion SCD.

Coded information may be used as said certain signal component, as a part thereof or as one or for one suspension criterion SCD.

Data service information may be used as said certain signal component, as a part thereof or as one or for one suspension criterion SCD, in particular from a data service demodulation process or decoding process.

Service description information may be used as said certain signal component, as a part thereof or as one or for one suspension criterion SCD, in particular from a service description demodulation process or decoding process.

An RDS signal or a part thereof may be used as said certain signal component, as a part thereof or as one or for one suspension criterion SCD.

An AGC control value or an automatic gain control value may be used as one or for one suspension criterion SCD.

Envelope information with respect to said signal S to be processed or a part thereof may be used as one or for one suspension criterion SCD, in particular from a respective demodulation process.

Stereo information with respect to said signal S to be processed or a part thereof may be used as one or for one suspension criterion SCD, in particular from a respective demodulation process.

Said process of suspending said at least one of the group consisting of NF processing steps, audio processing steps, demodulation processing steps, and parts thereof may be or may comprise at least one of switching off, disenabling, and having standby monaural processing or mono processing, monaural reproduction or mono reproduction, and monaural playback or mono playback.

Said process of suspending said at least one of the group consisting of NF processing steps, audio processing steps, demodulation processing steps, and parts thereof may be or may comprise at least one of switching off, disenabling, and having standby at least one of a clock and a trigger, in particular to thereby at least one of switch off, have standby, and disable a digital processing unit.

Said process of suspending said at least one of the group consisting of NF processing steps, audio processing steps, demodulation processing steps, and parts thereof may be or may comprise at least one of switching off, disenabling, and having standby at least one of avoiding and reducing flip-flop load currencies, in particular by routing identical values through respective flip-flops, in particular in multiplex stereo processing units.

Said process of suspending said at least one of the group consisting of NF processing steps, audio processing steps, demodulation processing steps, and parts thereof may be or comprise at least one of switching off, disenabling, and having standby a power supply in or for analogue circuits or parts thereof.

Said pre-processing stage or section S2 may be or may comprises a demodulation process.

Said pre-processing stage or section S2 may be or may comprise an envelope information demodulation process.

Said pre-processing stage or section S2 may be or may comprise a stereo information demodulation process.

Said pre-processing stage or section S2 may be or may comprise a data service demodulation or decoding process.

Said pre-processing stage or section S2 may be or may comprise a service description demodulation or decoding process.

Said pre-processing stage or section S2 may be or may comprises an AGC process or automatic gain control process.

According to an additional aspect the present invention further provides an apparatus 10 for processing a signal, which is adapted and which comprises means for carrying out and realizing a method for processing a signal according to the present invention and the steps thereof.

The apparatus 10 may be or may comprise a super-heterodyne receiver.

The apparatus 10 may comprise an input amplifier stage or section 1, a first band pass filter stage or section 2, a mixer stage or section 3, a second band pass filter stage or section 4, an automatic gain control stage or section 5. a demodulation stage or section 6, and a NF processing/audio processing stage or section 7, in particular sequentially connected in this order.

According to another aspect the present invention also provides a computer program product, comprising computer program means which is arranged and adapted in order to carry out and realize a method for processing a signal according to the present invention and the steps thereof when is executed on a computer or a digital signal processing means.

In addition, according to still a further aspect the present invention provides a computer readable storage medium, comprising a computer program product according to the present invention.

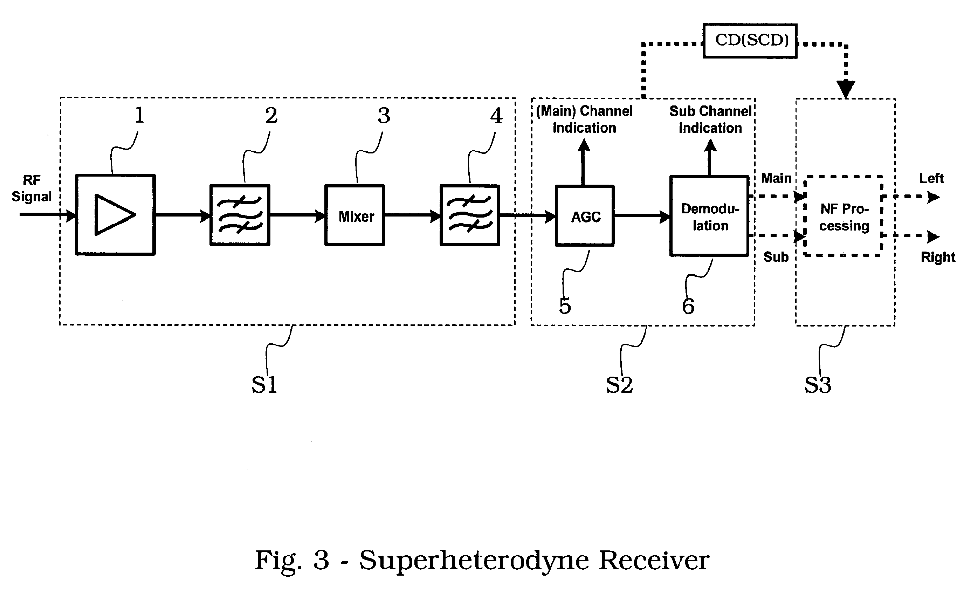

These and further aspects of the present invention will be further discussed in the following:
The present invention inter alia relates also to power efficient broadcast receiver.
In particular in mobile electronic devices one of the most crucial benchmarks is the power consumption, which is directly related to the battery life time.
The present invention inter alia proposes a strategy to reduce power consumption in broadcast receivers, especially in audio broadcast receivers.
A broadcast receiver e.g. consists of various steps to demodulate the received signal to finally output an (audio) signal. It contains an AGC, a demodulation step followed by some NF or audio processing.
The present invention proposes to switch off not needed NF and/or audio processing depending on information, gained from the AGC and in the demodulation process.
One target of the present invention is to reduce the power consumption of a (digital) broadcast receiver, to be integrated into an already developed digital chip.
So far a separate, analogue chip is needed. Analogue broadcast chips have superior power consumption characteristics, and switch off strategies are probably more difficult to realize. Therefore maybe no power consumption reduction strategy was needed so far.
A broadcast receiver consists of a number of signal processing steps, sections or module in order to transform a received RF signal into a wanted (audio) signal. Fig. 3 shows a block diagram of the super-heterodyne receiver architecture, which is commonly used.
The present invention inter alia proposes to switch off at least parts of the NF /audio processing depending on the information gained from the AGC and Demodulation.
At least two strategies can be thought of:
   1. To switch off all not needed NF / audio processing functionality in case the demodulation detects monaural reception, or the user forces Mono, e.g. because of bad signal quality.
      Today most common audio broadcast system provide the capability to transmit stereo signals. Usually the transmitted signal contains a main channel (e.g. a sum signal (1+r)), which might be identical with the related monaural signal and a sub channel (e.g. a difference signal (1-r)), only needed for stereo reception. In case the received signal is monaural (or the user forces Mono) the processing of the stereo information, e.g. the sub channel, can be switched off. The only one output signal (left=right) can be determined by processing just one signal, e.g. the main channel.
      The receiver can distinguish between monaural and stereophonic signal from information gained in the demodulation process (e.g. sub channel detection).
   2. To switch off all NF / audio processing functionality in case the AGC and /or the Demodulation detects no signal at all (e.g. during tuning).
      If no signal at all is available, the NF / audio processing can be stopped completely, and the audio output (left, right) can be muted. This is, besides other conditions, true during tuning most of the time.
      The information whether a broadcast signal is currently received or not (main channel detection) can be derived from the AGC or from the Demodulation process.

Of cause the concept can be extended to other information, which might be contained in the broadcast signal, as e.g. RDS data. Moreover the concept can be easily applied to other receiver architectures as e.g. a feed forward receiver.

In the following, further possible aspects are elucidated which may arbitrarily be combined according to the present invention.

### Examples for Switch-off criteria

- AGC Control Value : Indicates whether a signal is received or not. All NF processing might be switched off.
- Demodulation (Envelope Information) : Indicates whether a signal is received or not. All NF processing might be switched off.
- Demodulation (Stereo Information) : Indicates whether a received signal is monaural or stereo. Sub channel processing can be switched off.
- Data Service Demodulation / Decoding : Some broadcast signal include optional data services, e.g. RDS. If no data signal is detected (e.g. at the synchronization process), the decoding unit can be stopped.
- Service Description Demodulation / Decoding : Digital transmission signals often include different types of information (even simultaneously). Decoding units for data not available in the currently received channel can be switched off.

### Signal detection

- AGC Control Value : The AGC amplifies the incoming signal to reach a constant level at the AGC output. If the amplification reaches an upper limit, no signal is received at the input.
- Demodulation (Envelope Information) : One side information coming out of the FM demodulation is the level of the signal at this FM demodulation. This also indicates the presence of a signal.
- Demodulation (Stereo Information) : The Stereo Information can be derived from various processes, depending on the signal characteristic, e.g.:
   o In Stereo FM broadcasting, a pilot signal is transmitted, which indicates stereophonic broadcasting, or the presence of a sub channel can be detected.
   o In some standards (e.g. NTSC television sound) a "CUE" signal (AM modulated signal) is added to the FM multiplex indicating, whether the signal is monaural, stereo or bilingual.
- Data Service Demodulation / Decoding : Data services, in general every digital communication signal, has to pass several decoding steps: frequency synchronization, time synchronization, channel decoding, source decoding, from which a presence or characteristic of a signal can be derived.
- Service Description Demodulation / Decoding : Digital communication channels often contain information describing the content of the transmitted information, which can be used to switch off respective demodulation/decoding functionality.

### Switch off strategies

- Disabling the clock : To disable a digital processing unit, e.g. the clock (trigger) can be switched off or disabled.
- Avoid Flip-Flop Load Currency : By routing identical values through the flip-flops to decrease load currency, e.g. in multiplex stereo processing units.
- Analogue Power Supply : In analogue circuits the power supply for parts of the circuit can be cut.

### Additional Comment

- The device is all the time operating providing the maximum "useful" output, no stand-by without output is "running".
- The processing can be running all the time or continuously an analyzing the signal's characteristic and/or properties also continuously to enable processing functionality again as soon as the signal changes - e.g. after a mono to stereo change, a channel change, during news or the like.
- The switched off demodulation functionality can be of totally different characteristic, e.g. not available sub-channel including video, pictures, multi-media messages or the like.

In the following, in more detail reference is taken to the accompanying figures:

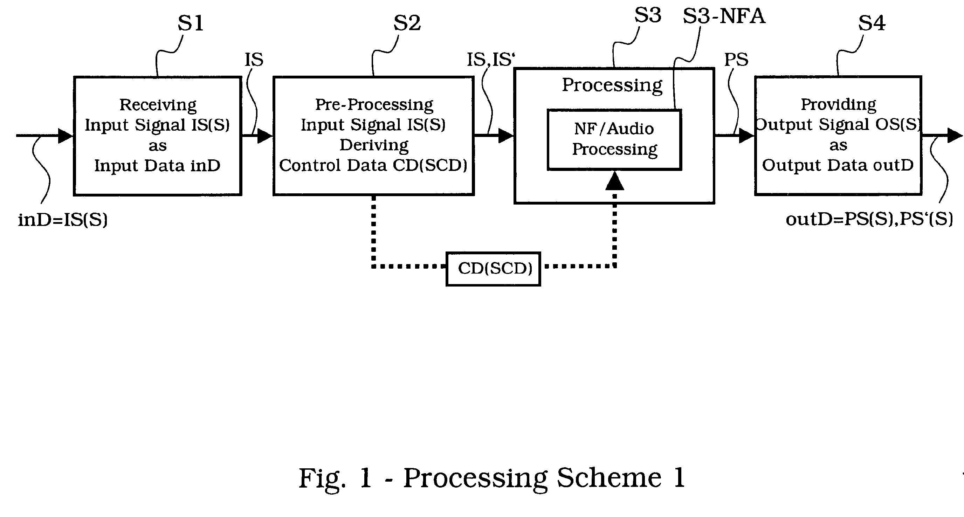

Fig. 1 elucidates by means of a schematic block diagram a first embodiment of the method for processing a signal S according to the present invention.

In a first stage or section S 1 an input signal IS which is representative for a signal S to be processed is received as input data inD. In a following second stage or section S2 said input data inD, i.e. said input signal IS are pre-processed in order to derive control data CD which contain or represent respective suspension criteria or suspension criteria data SCD which are used in order to control the succeeding processing steps of the following third stage or section S3. It is also possible that not the input signal IS, i.e. the signal S to be processed, as such is pre-processed, but a derivative thereof, for instance some sub-channel data or sub-channel signal or the like. It is also possible that instead of feeding the input signal IS directly to the following stage or section S3 of processing to forward instead a respective derivative IS' of said input signal IS.

In the following third stage or section S3 the input signal IS or a derivate IS' thereof are processed. This can be done by a variety and plurality of different processing steps. It is a basic aspect of the present invention to use said control data CD, namely said suspension criteria SCD in order to control at least one of the processing steps of processing stage or section S3. In the embodiment shown in Fig. 1 NF or audio processing steps S3-NFA are controlled by said control data CD. If said control data CD realize certain suspension criteria the respective NF or audio processing steps S3-NFA are suspended, switched off or disabled. This is done while in particular other processing steps of the processing stage or section S3 still remain active. As a result of the action of the processing stage or section S3 a process signal PS is obtained which is forwarded to the following fourth stage or section S4 of outputting/providing said processed signal PS or a derivative PS' thereof as output data outD.

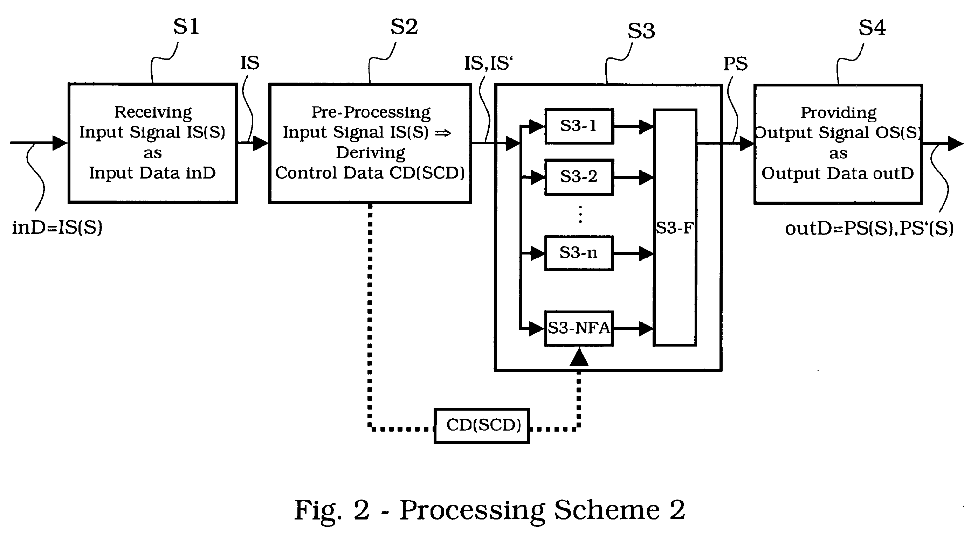

Fig. 2 elucidates by means of a schematic block diagram a second embodiment of the method for processing a signal S according to the present invention.

In a first stage or section S1 an input signal IS which is representative for a signal S to be processed is received as input data inD. In a following second stage or section S2 said input data inD, i.e. said input signal IS are pre-processed in order to derive control data CD which contain or represent respective suspension criteria or suspension criteria data SCD which are used in order to control the succeeding processing steps of the following third stage or section S3. It is also possible that not the input signal IS, i.e. the signal S to be processed, as such is pre-processed, but a derivative thereof, for instance some sub-channel data or sub-channel signal or the like. It is also possible that instead of feeding the input signal IS directly to the following stage or section S3 of processing to forward instead a respective derivative IS' of said input signal IS.

In the following third stage or section S3 the input signal IS or a derivate IS' thereof are processed. This can be done by a variety and plurality of different processing steps. It is a basic aspect of the present invention to use said control data CD, namely said suspension criteria SCD in order to control at least one of the processing steps of processing stage or section S3. In the embodiment shown in Fig. 1 NF or audio processing steps S3-NFA are controlled by said control data CD. If said control data CD realize certain suspension criteria the respective NF or audio processing steps S3-NFA are suspended, switched off or disabled. This is done while in particular other processing steps of the processing stage or section S3 still remain active. As a result of the action of the processing stage or section S3 a process signal PS is obtained which is forwarded to the following fourth stage or section S4 of outputting/providing said processed signal PS or a derivative PS' thereof as output data outD.

In addition to Fig. 1 Fig. 2 demonstrates an embodiment wherein the processing stage or section S3 is constituted by a plurality of regular processing steps S3-1, ..., S3-n as well as by a respective NF or audio processing S3-NFA, each of which generating a respective intermediate signal ISI, ..., ISn and ISNFA, respectively. These intermediate signals ISI, ..., ISn and ISNFA, respectively are individually fed into a final processing stage or section S3-F of the third or processing stage or section S3 in order to combine the intermediate signals IS1, ..., ISn and ISNFA, respectively and in order to provide a respective processed signal PS as a result which is then fed into the fourth stage or section S4 for providing and/or for outputting said processed signal PS or a derivative PS' thereof as said output data outD.

As already indicated above an apparatus according to the present invention for processing a signal S may be realized as a superheterodyne receiver. Such a superheterodyne receiver is presented in Fig. 3. The superheterodyne receiver of Fig. 3 is formed by an amplifier stage or section 1, a band pass filter stage or section 2, a mixer stage or section 3, a second band pass filter stage or section 4, an AGC or automatic gain control stage or section 5, a demodulation stage or section 6, and a NF or audio processing stage or section 7 in the indicated order.

The first or amplifying stage or section 1 receives a RF signal as an input signal IS which is representative for the signal S to be processed. The AGC stage or section 5 and/or the demodulation stage or section 6 are adapted to pre-process the respective intermediate signal which is forwarded from the second bass pass filter stage or section 4 and from the AGC stage or section 5, respectively. As a result of the respective pre-processing steps control data CD in the sense of a suspension criterion are obtained. The AGC stage or section 5 therefore forms a channel or main channel indication and the demodulation stage or section 7 forms a sub channel indication which can be used in order to control the processing of the NF or audio processing stage or section and the sub stage or sections in the sub steps thereof.

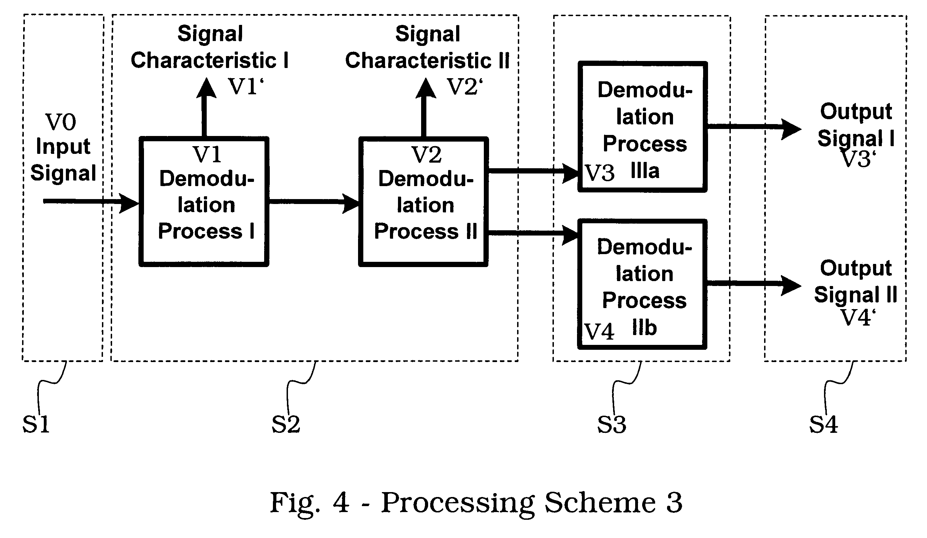

The schematic block diagram of Fig. 4 demonstrates a more general aspect of the present invention.

Here one has after having received an input signal IS which is representative for a signal S to be processed in an initial step V0 which is formed by a pre-processing stage or section S2 being constituted by two sequentially arranged first and second demodulation processes V1 and V2 and a processing stage or section S3 which is formed by two parallely arranged demodulation processes V3 and V4. The first demodulation process V1 of the pre-processing stage or section S1 is adapted to derive a first signal characteristic V1' which is used in the processing stage or section S3 in order to control the second demodulation process V2 of the pre-processing stage or section S2 and/or the first and second demodulation processes V3 and V4 of the processing stage or section S3 in a certain and pre-defined combination. The second demodulation process V2 of the pre-processing stage or section S2 is adapted to obtain a second signal characteristic V2' which is used in order to control at least one of the first and second demodulation processes V3 and V4 of the processing stage or section S3 in a given and pre-defined combination. The first and second demodulation process V3 and V4 of the processing stage or section S3 are adapted in order to provide first and second output signals V3' and V4' which are then provided and output in a final stage or section S4.

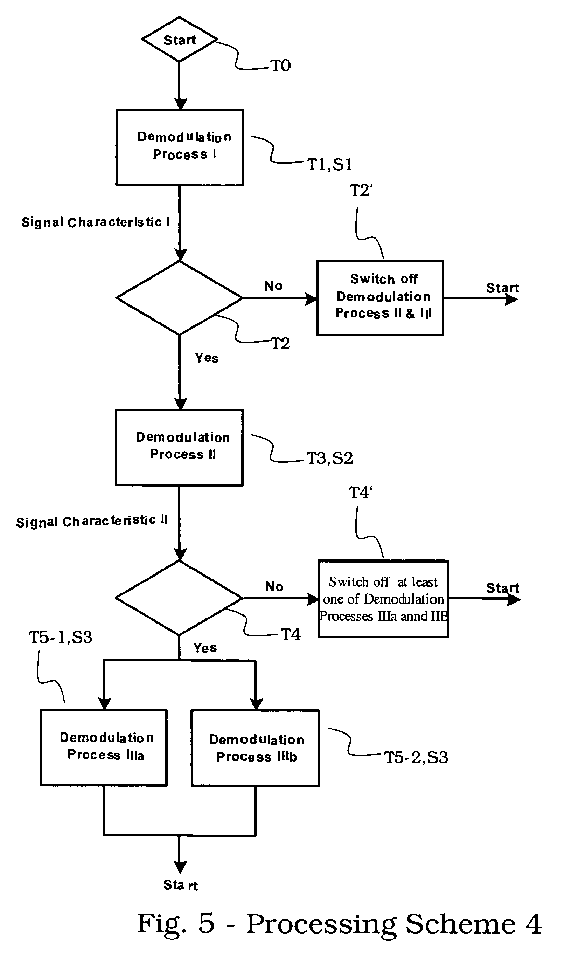

According to the first realization of the general arrangement of Fig. 4 as shown in Fig. 5, the first demodulation process T1 which is a part of the pre-processing stage or section S2 derives a first signal characteristic which is then analyzed and compared T2 in order to decide whether according to a conditional step T2' the further demodulation processes have to be switched off or whether a second demodulation process T3 which is also a part of the pre-processing stage or section S2 has to be performed in order to derive a second signal characteristic. The second signal characteristic if applicable is then fed into a further analyzing and comparison step T4 in order to decide whether the following demodulation processes - V3 and V4 in Fig. 4 - have to be switched off T4' or whether these demodulation processes V3 and V4 have to be performed in the following steps T5-1 and T5-2. In each case, i.e. independent from the respective decisions of the analyzing and comparison steps T2 and T4 the processing returns to the initial step or starting step T0.

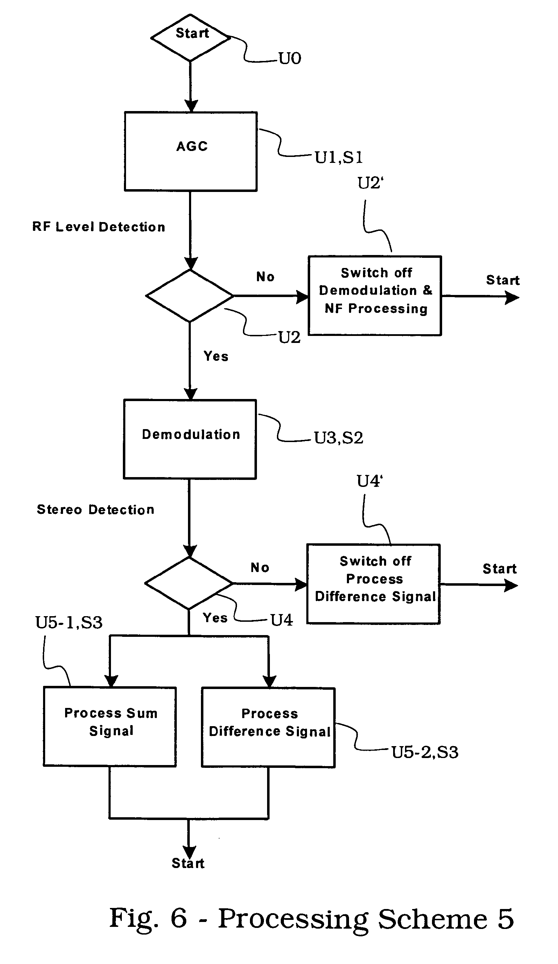

The flowchart as shown in Fig. 6 is very similar to the flowchart as shown in Fig. 5, however giving a more concrete realization of the different processes. Therefore after having initialized U0 the whole process in a first pre-processing step U1 which is a part of the pre-processing stage or section S1 an AGC process is started in order to realize a RF level detection. The RF level detection with its result is fed into a first comparison step U2 and if the respective suspension criterion is fulfilled, the further demodulation processes and the NF processing are switched off U2'. Otherwise the pre-processing S2 continues with a further demodulation U3 in order to realize a stereo detection. The result of the stereo detection is fed into a analyzing and comparison step U4 which decides on whether or not to switch off U4' the processing of the different signal. If such a suspension criterion is not fulfilled in comparison step U4 the processing S3 is started in the regular manner by processing the sum signal U5-1 and by processing the different signal U5-2 in the regular manner.

### Reference Symbols

- **CD**: control data
- **inD**: input data
- **IS**: input signal
- **IS'**: derivative of input signal
- **IS 1, ..., ISn**: intermediate signal
- **ISNFA**: intermediate signal
- **outD**: output data
- **PS**: processed signal
- **PS'**: derivative of processed signal
- **SCD**: suspension criterion, suspension criteria data

- **1**: amplifier, amplifier stage or section
- **2**: first band pass filter, first band pass filter stage or section
- **3**: mixer, mixer stage or section
- **4**: second band pass filter, second band pass filter stage or section
- **5**: AGC, AGC stage or section
- **6**: demodulation, demodulation stage or section
- **7**: NF or audio processing stage or section
- **10**: Superheterodyne receiver

## Claims

1. Method for processing a signal (S),
- comprising at least a first processing stage (S2) and a second processing stage (S3),
- wherein said first processing stage (S2) is a preceding processing stage with respect to said second processing stage (S3),
- wherein at least one processing step of second processing stage (S3) is suspended while at least one of certain suspending criteria (SCD) is fulfilled, and
- wherein said at least one suspending criteria (SCD) is obtained as control data (CD) from at least one processing step of said second processing stage (S2) with respect to at least a part of said signal (S) to be processed or a derivative thereof.

2. Method according to claim 1,
wherein said at least one suspensible processing step comprises at least one of the group consisting of
- NF processing steps,
- audio processing steps,
- demodulation processing steps, and
- parts thereof.

3. Method for processing a signal (S),
- wherein at least one of the group consisting of
- NF processing steps,
- audio processing steps,
- demodulation processing steps, and
- parts thereof
of a processing section (S3) is suspended,
- while at least one of certain suspending criteria (SCD) is fulfilled, and
- wherein said at least one suspending criteria (SCD) is obtained as control data (CD) by a pre-processing section (S2) with respect to at least a part of said signal (S) to be processed or a derivative thereof.

4. Method according to any one of the preceding claims,
wherein said process of suspending said at least one of the group consisting of NF processing steps, audio processing steps, demodulation processing steps, and parts thereof comprises at least one of switching off, disabling and having stand-by one or a plurality of the group consisting of respective processing elements, processing devices and parts thereof for thereby at least one of reducing power consumption, controlling the design and outputting an output signal (outD).

5. Method according to any one of the preceding claims,
wherein the presence of monaural reception condition in the reception process (S1) for said signal (S) to be processed is used for at least one suspension criterion (SCD).

6. Method according to any one of the preceding claims,
wherein at least one of the presence of a certain noise level in said signal (S) to be processed and said noise level in said signal (S) to be processed as such is used for at least one suspension criterion (SCD).

7. Method according to any one of the preceding claims,
wherein at least one of the presence of a signal (S) to be processed with a signal strength below a certain threshold value and said signal strength of said signal (S) to be processed as such is used for at least one suspension criterion (SCD).

8. Method according to claim 7,
wherein said threshold value indicates that no signal (S) to be processed is received.

9. Method according to any one of the preceding claims,
wherein the presence of a certain signal component within said signal (S) to be processed is used for at least one suspension criterion (SCD).

10. Method according to claim 9,
wherein coded information is used as said certain signal component for at least one suspension criterion (SCD).

11. Method according to any one of the preceding claims 9 or 10,
wherein data service information is used as said certain signal component for at least one suspension criterion (SCD).

12. Method according to any one of the preceding claims 9 to 11,
wherein service description information is used as said certain signal component for at least one suspension criterion (SCD.

13. Method according to any one of the preceding claims 9 to 12,
wherein a RDS signal is used as said certain signal component for at least one suspension criterion (SCD),

14. Method according to any one of the preceding claims,
wherein an automatic gain control value is used for at least one suspension criterion (SCD).

15. Method according to any one of the preceding claims,
wherein envelope information with respect to said signal (S) to be processed is used for at least one suspension criterion (SCD.

16. Method according to any one of the preceding claims,
wherein stereo information with respect to said signal (S) to be processed is used for at least one suspension criterion (SCD).

17. Method according to any one of the preceding claims,
wherein said process of suspending said at least one of the group consisting of NF processing steps, audio processing steps, demodulation processing steps, and parts thereof comprises at least one of the group consisting of switching off, disenabling, and having standby at least one of the group consisting of monaural processing, monaural reproduction, and monaural playback.

18. Method according to any one of the preceding claims.
wherein said process of suspending said at least one of the group consisting of NF processing steps, audio processing steps, demodulation processing steps, and parts thereof comprises at least one of the group consisting of switching off, disenabling, and having standby at least one of the group consisting of a clock and a trigger to thereby at least one of switch off, have standby, and disable a digital processing unit.

19. Method according to any one of the preceding claims,
wherein said process of suspending said at least one of the group consisting of NF processing steps, audio processing steps, demodulation processing steps, and parts thereof comprises at least one of the group consisting of switching off, disenabling, and having standby at least one of the group consisting of avoiding and reducing flip-flop load currencies by routing identical values through respective flip-flops in multiplex stereo processing units.

20. Method according to any one of the preceding claims,
wherein said process of suspending said at least one of the group consisting of NF processing steps, audio processing steps, demodulation processing steps, and parts thereof comprises at least one of the group consisting of switching off, disenabling, and having standby a power supply for analogue circuits.

21. Method according to any one of the preceding claims,
wherein said pre-processing section (S2) comprises a demodulation process.

22. Method according to claim 21,
wherein said pre-processing section (S2) comprises an envelope information demodulation process.

23. Method according to any one of the preceding claims 21 or 22,
wherein said pre-processing section (S2) comprises a stereo information demodulation process.

24. Method according to any one of the preceding claims 21 to 23,
wherein said pre-processing section (S2) comprises a data service demodulation process.

25. Method according to any one of the preceding claims 21 to 24,
wherein said pre-processing section (S2) is or comprises a service description demodulation or decoding process.

26. Method according to any one of the preceding claims,
wherein said pre-processing section (S2) comprises an automatic gain control process.

27. Apparatus for processing a signal (S).
comprising means for realizing a method for processing a signal (S) according to any one of the claims 1 to 26 and the steps thereof.

28. Apparatus according to claim 27,
comprising a super-heterodyne receiver.

29. Apparatus according to any one of the preceding claims 27 or 28,
comprising an input amplifier section (1), a first band pass filter section (2), a mixer section (3), a second band pass filter section (4), an automatic gain control section (5), a demodulation section (6), and a NF processing/audio processing section (7) sequentially connected in this order.

30. Computer program product,
comprising computer program means which is adapted in order to realize a method for processing a signal (S) according to any one of the claims 1 to 26 and the steps thereof when is executed on a computer or a digital signal processing means.

31. Computer readable storage medium,
comprising a computer program product according to claim 30.
